# EUROPÄISCHE PATENTSCHRIFT

(11) **EP 4 026 753 B1**
(45) Veröffentlichungstag und Bekanntmachung des Hinweises auf die Patenterteilung: **11.12.2024**
(21) Anmeldenummer: 21201717.2
(22) Anmeldetag: 08.10.2021
(51) Int. Cl.: B62D 5/04, F16H 7/02, F16H 57/01

(54) **VERFAHREN ZUR BESTIMMUNG DES VERSCHLEISSES EINES LENKSYSTEMS EINES FAHRZEUGS**
METHOD FOR DETERMINING THE WEAR OF A STEERING SYSTEM OF A VEHICLE
PROCÉDÉ DE DÉTERMINATION DE L'USURE D'UN SYSTÈME DE DIRECTION D'UN VÉHICULE

(30) Priorität: 12.01.2021 DE 102021200216
(43) Veröffentlichungstag der Anmeldung: 13.07.2022
(73) Patentinhaber: VOLKSWAGEN AG, 38440 Wolfsburg (DE)
(72) Erfinder: Kreis, Christopher, 38126 Braunschweig (DE); Schumann, Heiko, 38116 Braunschweig (DE)

(56) Entgegenhaltungen:
- DE-A1- 102015 218 991
- US-A1- 2017 225 705
- US-A1- 2019 315 390

## Beschreibung

Die Erfindung betrifft ein Verfahren zur Bestimmung des Verschleißes eines Lenksystems eines Fahrzeugs, wobei das Lenksystem eine Zahnstange aufweist, wobei das Lenksystem einen Radaktuator in Form eines Elektromotors aufweist, wobei der Radaktuator parallel zur Zahnstange angeordnet ist, wobei durch den Radaktuator mittels eines Zahnriemens eine Zahnstangenverschiebekraft erzeugt wird und wobei das Lenksystem mindestens einen mechanischen Anschlag für die Zahnstange aufweist.

Daneben betrifft die Erfindung ein Lenksystem für ein Fahrzeug, mit mindestens einer Zahnstange, mit mindestens einem Radaktuator, mit mindestens einem Zahnriemen und mit mindestens einem mechanischen Anschlag, wobei der Radaktuator parallel zur Zahnstange angeordnet ist, wobei durch den Radaktuator mittels des Zahnriemens eine Zahnstangenverschiebekraft erzeugbar ist und wobei die Zahnstange durch die Zahnstangenverschiebekraft an den mindestens einen mechanischen Anschlag verschiebbar ist.

Ferner betrifft die Erfindung ein Fahrzeug mit einem Lenksystem.

Zukünftige Lenksysteme der Steer-by-Wire Bauart benötigen keine Lenkzwischenwelle, da die mechanische Verbindung zum Lenkrad entfällt. Grundsätzlich ist es sinnvoll den Radaktuator auf Basis heutiger, aus elektromechanischen Lenkungen bekannten Technikkonzepten aufzubauen. Ein möglicher Aufbau ist deshalb die zur Zahnstange (achs)parallele Anordnung des Elektromotors. Das Motormoment wird dann über einen Zahnriementrieb und einen Kugelgewindetrieb in eine Zahnstangenverschiebekraft gewandelt. Eine zentrale Anforderung an einen Radaktuator ist die sichere Ermittlung der aktuell vorliegenden Zahnstangenposition, beziehungsweise eines mit dieser Zahnstangenposition korrespondierenden, mittels eines (gegebenenfalls variablen) Übersetzungsfaktors berechneten Lenkrad- oder Radlenkwinkels.

Dieses Signal wird für eine genaue und sichere Positionsregelung der Zahnstange und damit der Führung des Fahrzeugs benötigt. Ein nach dem heutigen Stand der Technik übliches Vorgehen besteht dabei darin, eine erste Referenzposition mittels eines genauen Referenzsignalgebers zu ermitteln, von der dann mit dem feiner aufgelösten Signal des dem Elektromotor zugeordneten Rotorlagegebers weitergerechnet wird.

Der Rotorlagegeber kann nicht als alleiniger Sensor eingesetzt werden, da er üblicherweise als Single-Turn Sensor ausgelegt ist und seinen Nullpunkt immer an der aktuell vorliegenden Position beim Aufstarten des Systems festlegt. Mittels eines Rechenalgorithmus, der den vom Referenzsignalgeber gelieferten Wert verwendet und die Umdrehungen des Elektromotors mitzählt, ist so aber eine genaue und sichere Ermittlung des Lenkwinkels, bzw. der Zahnstangenposition über den gesamten Lenkhub möglich. Allerdings kann bei diesen Systemen ein Überspringen eines Zahnriemens nicht ausgeschlossen werden.

Auch die US 2019/0315390 A1 zeigt beispielsweise ein Fahrzeuglenksystem mit einer Zahnstangenwelle und einem Umwandlungsmechanismus, der die Drehung einer rotierenden Welle des Motors in eine Hin- und Herbewegung der Zahnstangenwelle umwandelt. Der Umwandlungsmechanismus umfasst eine Antriebsscheibe, die sich mit der rotierenden Welle dreht, eine angetriebene Riemenscheibe, die um eine Achse der Zahnstangenwelle drehbar ist, und einen Zahnriemen, der sich um die Antriebsscheibe und die angetriebene Riemenscheibe erstreckt, und wandelt die Drehung der rotierenden Welle in eine Hin- und Herbewegung um. Die Zahnstangenwelle wird beim Drehen der Antriebsscheibe über den Zahnriemen auf die angetriebene Riemenscheibe übertragen. Das Fahrzeuglenksystem umfasst ferner eine Bestimmungsschaltung, die das Überspringen von Zähnen bestimmt, bei der es sich um eine Änderung der Eingriffsposition zwischen der Antriebsscheibe und dem Zahnriemen handelt. Das Überspringen des Zahnriemens wird zwar erkannt, aber nicht verhindert.

Bereits bei heutigen Lenksystemen mit achsparalleler Anordnung des Radaktuators ergibt sich folglich die Problematik, dass ein Überspringen des Zahnriemens nicht völlig ausgeschlossen werden kann. Dieses kann auch bei abgeschaltetem System vorkommen. Da dies im Berechnungsalgorithmus nicht einbezogen werden kann, entsteht so ein Fehler im berechneten Wert, der im Extremfall sicherheitsrelevant sein kann. Eine Speicherung des letzten Wertes allein ist demnach als Maßnahme nicht ausreichend, der gespeicherte Wert muss in regelmäßigem zeitlichem Abstand mit dem Referenzsignal abgeglichen werden. Außerdem ergeben sich aus diesem Sachverhalt bestimmte Anforderungen an die Genauigkeit des Referenzsignalgebers, zum Beispiel müssen mehrere Referenzpositionen gemessen werden können.

Bei einem Steer-by-Wire Radaktuator in einer Bauweise mit achsparalleler Anordnung liegt grundsätzlich die gleiche Problematik vor. So kann die beschriebene, kostenintensive Sensorik eingesetzt werden. Jedoch erfordert dies entweder einen Zahnstangenpositionsgeber als Referenzsignalgeber oder es ist sogar erforderlich ein Ritzel an der Zahnstange anzuordnen, damit eine rotatorische Messung möglich ist.

Der Erfindung liegt nun die Aufgabe zugrunde, ein Verfahren zur Bestimmung des Verschleißes eines modernen Lenksystems sowie ein Lenksystem und ein Fahrzeug mit einem Lenksystem anzugeben, bei denen die Bestimmung des Verschleißes des Lenksystems effektiv und weniger kostenintensiv als durch die aus dem Stand der Technik bekannten Verfahren realisiert werden kann.

Diese Aufgabe ist bei der vorliegenden Erfindung zunächst durch die Merkmale des Patentanspruchs 1 dadurch gelöst, dass durch den Radaktuator ein Motormoment aufgebracht wird, durch das die Zahnstange an den mechanischen Anschlag gefahren wird, dass ein Motorwinkel des Radaktuators bestimmt wird, dass nach Erreichen des mechanischen Anschlags das Motormoment weiter erhöht wird, dass die Änderung des Motorwinkels des Radaktuators bestimmt wird, dass in Abhängigkeit des Motorwinkels und des Motormoments ein Kennwert als Maß des Verschleißes des Zahnriemens bestimmt wird.

Die erfindungsgemäße Lösung nutzt die Tatsache, dass ein Überspringen des Riemens wahrscheinlicher wird, wenn dieser beispielsweise durch Alterung, eingedrungene Flüssigkeit, zum Beispiel Wasser, oder Verschleiß geschädigt wurde. Eine solche Riemenschädigung tritt nicht schlagartig auf, sondern ist mit einer langsamen Veränderung der mechanischen Eigenschaften des Riemens verbunden. Ziel der erfindungsgemäßen Lösung ist demnach die Schädigung des Zahnriemens frühzeitig zu erkennen um dann Maßnahmen zu ergreifen, die dazu führen, dass ein Überspringen des Riemens im Betrieb praktisch nie auftreten kann. Maßgeblich für die Auslegung sind die aus den jeweils gültigen Normen für sicherheitsrelevante Produkte zu entnehmenden Ausfallwahrscheinlichkeiten.

Gegenstand der Erfindung ist demnach ein Verfahren zur Erkennung des Verschleißes des Zahnriemens, wobei das Lenksystem ein Steer-by-Wire Lenksystem sein kann. Aufgrund des Verfahrens ist es möglich in dem System ausschließlich einen Rotorlagesensor zur Positions-/Winkelermittlung einzusetzen. Ein zusätzlicher Referenzwertgeber, wie im Stand der Technik üblich, entfällt. Aufgrund der Sensoreigenschaften ist weiterhin ein Initialisierungsvorgang erforderlich. Dazu werden die mechanischen Endanschläge, deren Positionen bekannt sind, herangezogen.

Bei der Ausführung des Verfahrens wird dann zunächst die Zahnstange an den mechanischen Anschlag gefahren. Diese Position kann anhand des Motormomentenanstiegs bei (nahezu) konstanter Motorwinkelposition erkannt werden. Die weitere Erhöhung des Motormomentes führt zu einer Zunahme des gemessenen Motorwinkels. Dies ist in der Elastizität des Zahnriemens begründet, da die Zahnstange am mechanischen Anschlag nicht weiter bewegt werden kann. Aus der Wertekombination von Motormoment und Motorwinkelposition und/oder anderen Größen wird dann entsprechend ein Kennwert bestimmt, zum Beispiel eine Riemenelastizität.

Durch bestimmte Muster im Motormoment, zum Beispiel Schwingungen und/oder pulsförmige Anregungen können weitere Kenngrößen ermittelt werden.

Weitere bevorzugte Ausgestaltungen der Erfindung ergeben sich aus den übrigen, in den Unteransprüchen genannten Merkmalen.

Bei einem ersten Ausführungsbeispiel des erfindungsgemäßen Verfahrens ist vorgesehen, dass der Kennwert mit vordefinierten Kennwerten verglichen wird. Bei den vordefinierten Kennwerten kann es sich beispielsweise um Kennwerte handeln, von denen bekannt ist, dass ein Verschleiß des Zahnriemens noch nicht vorliegt. Denkbar ist auch, dass der Kennwert entsprechend mit vordefinierten Kennwerten verglichen wird, bei denen bereits ein Verschleiß des Zahnriemens eingetreten ist.

Alternativ oder zusätzlich kann bei einem weiteren Ausführungsbeispiel des erfindungsgemäßen Verfahrens vorgesehen sein, dass der Kennwert mit Kennwerten aus vorherigen Prüfzyklen verglichen wird. Somit können kurz- und langfristige Veränderungen der Riemeneigenschaften erkannt werden.

Bei einer weiteren vorteilhaften Ausgestaltung der Erfindung ist vorgesehen, dass signalisiert wird, wenn der Kennwert einen vorgegebenen Grenzwert überschreitet oder unterschreitet. Wenn die Riemeneigenschaften bestimmte Grenzwerte über- oder unterschreiten, wird eine Systemreaktion eingeleitet. Dies kann beispielsweise eine Meldung im Kombiinstrument des Fahrzeugs sein. Bei der Meldung könnte dem Fahrer des Fahrzeugs mitgeteilt werden, dass die Lenkung in der Werkstatt zu prüfen ist.

Um weitere Optionen zur Verfügung zu stellen, ist bei einer weiteren bevorzugten Ausgestaltung des erfindungsgemäßen Verfahrens vorgesehen, dass der Kennwert in einem Speicher des Fahrzeugs abgelegt wird. Besonders vorteilhaft, als erste Reaktion, ist ein Systemeintrag, der für den Fahrer des Fahrzeugs nicht sichtbar ist, den aber eine Werkstatt auslesen kann, sodass bei einem anderweitig begründeten Werkstattaufenthalt die Lenkung genauer geprüft oder getauscht werden kann. Sollte dieses nach einer bestimmten Zeitdauer nach dem ersten Hinweis nicht erfolgt sein, kann als Folge ein für den Fahrer sichtbarer Hinweis ausgegeben werden. Durch den frühzeitigen Tausch der Lenkung wird somit vermieden, dass eine unbemerkte Riemenschädigung auftritt. Ein Riemensprung wird mit hinreichender Wahrscheinlichkeit ausgeschlossen.

Bei einer weiteren Ausgestaltung des erfindungsgemäßen Verfahrens ist vorgesehen, dass das Lenksystem einen zweiten mechanischen Anschlag aufweist, an dem die Bestimmung des Verschleißes durchgeführt wird. Durch wiederholte Messung an einem zweiten Referenzpunkt kann die Plausibilität der Messung überprüft und die Genauigkeit erhöht werden.

Um die Messung zu vereinheitlichen, ist bei einer weiteren Ausgestaltung der Erfindung vorgesehen, dass die Bestimmung des Verschleißes durchgeführt wird, wenn sich das Fahrzeug im Stand befindet. Die Messung könnte beispielsweise auch automatisch durchgeführt werden, wenn das Fahrzeug steht und sich kein Fahrer beziehungsweise kein Insasse im Fahrzeug befindet.

Um weiter eine Vergleichbarkeit der Messung zu ermöglichen, ist bei einer weiteren Ausgestaltung des erfindungsgemäßen Verfahrens vorgesehen, dass der Verschleiß in Abhängigkeit der Uhrzeit und/oder der Fahrzeugumgebung und/oder der Außentemperatur und/oder der Lenksystemtemperatur bestimmt wird. Zusätzlich kann zu der Uhrzeit auch die Zeit berücksichtigt werden, die seit dem letzten Prüfvorgang verstrichen ist. Denkbar ist, dass die Messung zu einer festgelegten Uhrzeit, zum Beispiel nachts, durchgeführt wird.

Zur Erkennung der Fahrzeugumgebung können beispielsweise Sensoren wie Kameras oder Mikrofone verwendet werden. Dabei kann es als relevant angesehen werden, ob das Fahrzeug sehr nah an einem Bordstein steht. Dann wäre es sinnvoll, dass eine Prüfung nicht durchgeführt wird, oder nur an dem, dem Bordstein abgewandten mechanischen Anschlag. Es kann durch die Sensorik entsprechend auch geprüft werden, ob sich Personen in der unmittelbaren Nähe des Fahrzeugs befinden. Bei der Berücksichtigung der Außentemperatur könnte eine Messung beispielsweise in einem bestimmten Temperaturfenster durchgeführt werden, um vergleichbare Prüfergebnisse zu erzielen. Anhand der vorgenannten Daten kann auch entschieden werden, ob der rechte oder der linke mechanische Anschlag verwendet wird.

Die zuvor genannte Aufgabe wird außerdem gelöst von einem vorgenannten Lenksystem für ein Fahrzeug, mit mindestens einer Zahnstange, mit mindestens einem Radaktuator, mit mindestens einem Zahnriemen und mit mindestens einem mechanischen Anschlag, wobei der Radaktuator parallel zur Zahnstange angeordnet ist, wobei durch den Radaktuator mittels des Zahnriemens eine Zahnstangenverschiebekraft erzeugbar ist und wobei die Zahnstange durch die Zahnstangenverschiebekraft an den mindestens einen mechanischen Anschlag verschiebbar ist.

Es ist vorgesehen, dass das Lenksystem dafür ausgelegt ist, ein erfindungsgemäßes Verfahren durchzuführen. Die obigen Ausführungen zum erfindungsgemäßen Verfahren gelten entsprechend auch für die erfindungsgemäße Vorrichtung.

Daneben wird die zuvor genannte Aufgabe gelöst von einem Fahrzeug, gemäß dem Kennzeichnungsteil des Patentanspruchs 10, wobei das Fahrzeug eine erfindungsgemäße Vorrichtung umfasst.

Die obigen Ausführungen zur erfindungsgemäßen Vorrichtung gelten entsprechend auch für das erfindungsgemäße Fahrzeug.

Die Erfindung wird nachfolgend in Ausführungsbeispielen anhand der zugehörigen Zeichnungen erläutert. Es zeigen:
- Figur 1: eine schematische Darstellung eines Steer-by-Wire Lenksystems,
- Figur 2: eine schematische Darstellung eines Lenksystems mit einem Radaktuator in einer Mittenstellung und
- Figur 3: eine schematische Darstellung eines Lenksystems mit einem Radaktuator in einer Endanschlagposition.

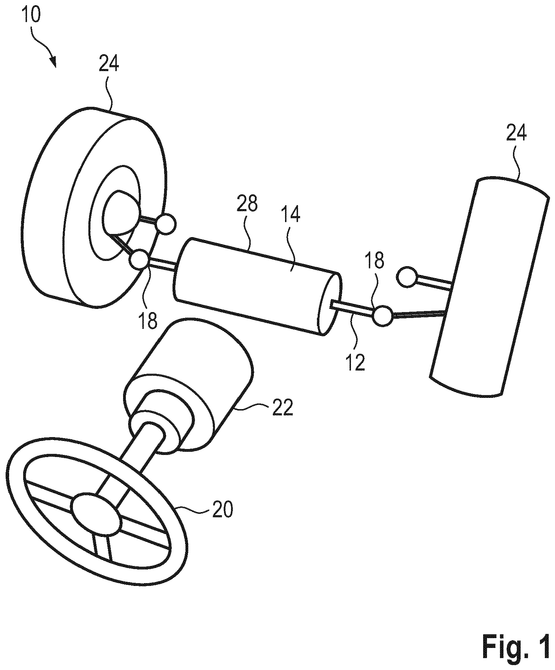

Figur 1 zeigt ein Lenksystem 10 für die Nutzung in einem Kraftfahrzeug. Das Lenksystem weist eine Zahnstange 12 auf. Parallel zu der Zahnstange ist ein Radaktuator 14 angeordnet, der mittels eines hier nicht dargestellten Zahnriemens 16 eine Zahnstangenverschiebekraft erzeugt, wodurch die Zahnstange 12 zwischen zwei mechanischen Anschlägen 18 bewegbar ist. Das Lenksystem 10 erhält einen Lenkbefehl von einem Sensor beziehungsweise dem Lenkrad 20 des Fahrzeugs.

Über ein Steuergerät 22 werden die Lenkbefehle ausschließlich elektrisch zum Radaktuator 14 weitergeleitet. Der Radaktuator 14 führt dann diesen Lenkbefehl aus. Bei dem hier dargestellten Lenksystem besteht folglich keine mechanische Verbindung zwischen dem Lenkrad 20 und den gelenkten Rädern 24. Ein solches Lenksystem 10 ist auch als Steer-by-wire System bekannt. Durch einen Kugelgewindetrieb wird die Bewegung der Zahnstange 12 in eine Lenkbewegung der Räder 24 umgewandelt.

Eine zentrale Anforderung an den Radaktuator 14 ist die sichere Ermittlung der aktuell vorliegenden Position der Zahnstange 12 beziehungsweise eines mit dieser Position korrespondierenden, mittels eines Übersetzungsfaktors berechneten Lenkrad- oder Radlenkwinkels. Dieses Signal wird für eine genaue und sichere Positionsregelung der Zahnstange 12 und damit der Führung des Fahrzeugs benötigt. Bei dem Lenksystem 10 ist es aber möglich, dass ein Überspringen des Zahnriemens 16, der mit dem Radaktuator 14 und der Zahnstange 12 verbunden ist, auftritt.

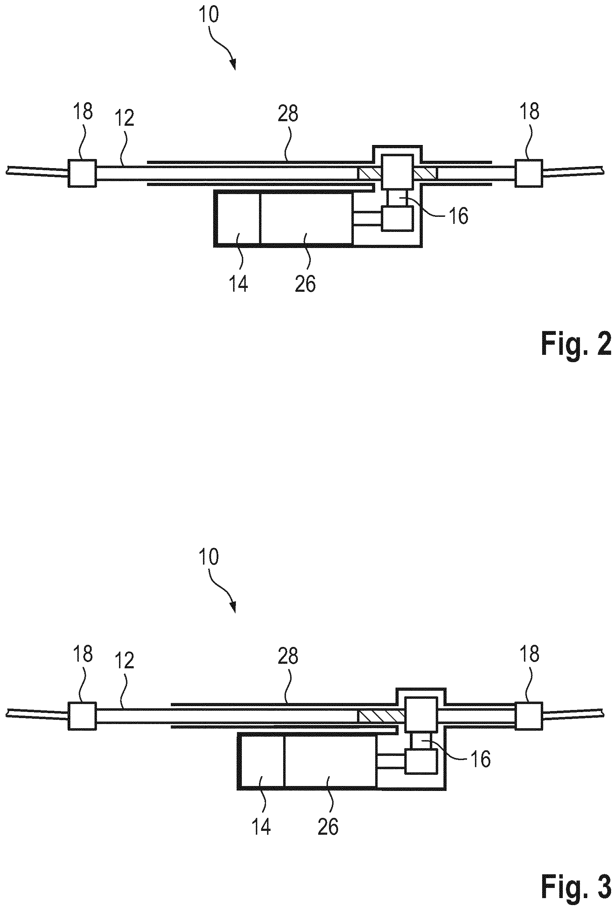

In den Figuren 2 und 3 ist schematisch eine Durchführung eines Verfahrens dargestellt, bei dem der Verschleißzustand des Zahnriemens 16 bestimmt werden kann. Wenn der Zustand des Zahnriemens 16 bekannt ist, kann auch ermittelt werden, wie wahrscheinlich es ist, dass ein Überspringen des Zahnriemens 16 auftritt. Idealerweise wird der Zahnriemen 16 beziehungsweise das Lenksystem 10 getauscht, bevor ein Überspringen des Zahnriemens 16 überhaupt auftreten kann.

Bei dem Verfahren wird die Zahnstange 12 zunächst aus einer Mittenstellung, wie in Figur 2 dargestellt, an den mechanischen Anschlag 18 gefahren, wie in Figur 3 dargestellt. Diese Position kann anhand des Motormomentenanstiegs des Radaktuators 14 bei (nahezu) konstanter Motorwinkelposition erkannt werden. Der Radaktuator 14 umfasst einen Winkelsensor 26, durch den der Motorwinkel des Radaktuators 14 bestimmt werden kann. Anschließend wird das Motormoment des Radaktuators 14 weiter erhöht. Die nun zusätzlich gemessene Zunahme des Motorwinkels ist begründet in der Elastizität des Zahnriemens 16, da die Zahnstange 12 am mechanischen Anschlag 18 nicht weiter bewegt werden kann. Aus der Wertekombination wird ein Kennwert, zum Beispiel eine Riemenelastizität berechnet.

Der Radaktuator 14 ist in einem Gehäuse 28 angeordnet, welches schützend um den Radaktuator 14, den Zahnriemen 16 und den Teil der Zahnstange 12 positioniert ist, an dem sich der Radaktuator 14 gerade befindet. Das Gehäuse 28 umschließt die Zahnstange 12 und ist an der Zahnstange 12 verschiebbar gelagert.

Durch bestimmte Muster im Motormoment, zum Beispiel Schwingungen und/oder pulsförmige Anregungen, können weitere Kenngrößen ermittelt werden. Die Kenngrößen werden gespeichert und anschließend mit vordefinierten Werten verglichen. Zusätzlich werden die Kenngrößen mit den Kenngrößen aus zurückliegenden Prüfzyklen verglichen. Somit können kurz- und langfristige Veränderungen der Riemeneigenschaften erkannt werden.

Wenn die Riemeneigenschaften bestimmte Grenzparameter über- oder unterschreiten wird eine Systemreaktion eingeleitet. Das kann beispielsweise eine Meldung im Kombiinstrument sein, dass die Lenkung in der Werkstatt zu prüfen ist. Als erste Reaktion ist ein Systemeintrag, der für den Fahrer nicht sichtbar ist vorgesehen, den aber die Werkstatt auslesen kann, sodass bei einem anderweitig begründeten Werkstattaufenthalt die Lenkung genauer geprüft oder getauscht werden kann. Sollte dies nach einer bestimmten Zeitdauer nach dem ersten Hinweis nicht erfolgt sein, wird erst ein für den Fahrer sichtbarer Hinweis ausgegeben. Durch den frühzeitigen Tausch der Lenkung wird somit vermieden, dass eine unbemerkte Riemenschädigung auftritt. Ein Riemensprung wird mit hinreichender Wahrscheinlichkeit ausgeschlossen. Die Prüfung kann auch am zweiten mechanischen Anschlag 18 wiederholt werden um hier weitere Kenngrößen zu ermitteln.

Zusätzlich kann der Lenkwinkel initialisiert werden. Für den Winkelsensor 26 des Radaktuators 13 muss eine Referenzposition verwendet werden um den Lenkwinkel beziehungsweise die Position der Zahnstange 16, ausgehend von dort zu berechnen. Dazu wird die Zahnstange 12 bis in einen der mechanischen Endanschläge 18 gefahren, deren genaue Position aus der mechanischen Konstruktion bekannt ist, wie dies in Figur 3 dargestellt ist. Dieser Wert kann dann als Referenz genutzt werden. Gegebenenfalls kann dieser Wert durch Anfahren des anderen Endanschlages 18 überprüft werden.

Durch den Radaktuator 14 ist diese Vorgehensweise möglich. Aufgrund der Bestimmung des Verschleißes des Zahnriemens 16 kann der regelmäßige Abgleich mit einem zusätzlichen Referenzsignal entfallen. Die über die Initialisierung aus den Endanschlägen gegebene Referenz ist hinreichend genau, um zusammen mit einem Rotorlagesignal die geforderte Sicherheitsstufe zu erfüllen. So kann das System ohne einen separaten, systeminternen oder externen, kostenintensiven Sensor auskommen.

### Bezugszeichenliste

- 10: Lenksystem
- 12: Zahnstange
- 14: Radaktuator
- 16: Zahnriemen
- 18: Mechanischer Anschlag
- 20: Lenkrad
- 22: Steuergerät
- 24: Räder
- 26: Winkelsensor
- 28: Gehäuse

## Patentansprüche

1. Verfahren zur Bestimmung des Verschleißes eines Lenksystems (10) eines Fahrzeugs, wobei das Lenksystem (10) eine Zahnstange (12) aufweist, wobei das Lenksystem (10) einen Radaktuator (14) in Form eines Elektromotors aufweist, wobei der Radaktuator (14) parallel zur Zahnstange (12) angeordnet ist, wobei durch den Radaktuator (14) mittels eines Zahnriemens (16) eine Zahnstangenverschiebekraft erzeugt wird und wobei das Lenksystem (10) mindestens einen mechanischen Anschlag (18) für die Zahnstange (12) aufweist, **dadurch gekennzeichnet, dass** durch den Radaktuator (14) ein Motormoment aufgebracht wird, durch das die Zahnstange (12) an den mechanischen Anschlag (18) gefahren wird, dass ein Motorwinkel des Radaktuators (14) bestimmt wird, dass nach Erreichen des mechanischen Anschlags (18) das Motormoment weiter erhöht wird, dass die Änderung des Motorwinkels des Radaktuators (14) bestimmt wird, dass in Abhängigkeit des Motorwinkels und des Motormoments ein Kennwert als Maß des Verschleißes des Zahnriemens (16) bestimmt wird.

2. Verfahren nach Anspruch 1, **dadurch gekennzeichnet, dass** der Kennwert mit vordefinierten Kennwerten verglichen wird.

3. Verfahren nach Anspruch 1 oder 2, **dadurch gekennzeichnet, dass** der Kennwert mit Kennwerten aus vorherigen Prüfzyklen verglichen wird.

4. Verfahren nach einem der Ansprüche 1 bis 3, **dadurch gekennzeichnet, dass** signalisiert wird, wenn der Kennwert einen vorgegebenen Grenzwert überschreitet oder unterschreitet.

5. Verfahren nach einem der Ansprüche 1 bis 4, **dadurch gekennzeichnet, dass** der Kennwert in einem Speicher des Fahrzeugs abgelegt wird.

6. Verfahren nach einem der Ansprüche 1 bis 5, **dadurch gekennzeichnet, dass** das Lenksystem (10) einen zweiten mechanischen Anschlag (18) aufweist, an dem die Bestimmung des Verschleißes durchgeführt wird.

7. Verfahren nach einem der Ansprüche 1 bis 6, **dadurch gekennzeichnet, dass** die Bestimmung des Verschleißes durchgeführt wird, wenn sich das Fahrzeug im Stand befindet.

8. Verfahren nach einem der Ansprüche 1 bis 7, **dadurch gekennzeichnet, dass** der Verschleiß in Abhängigkeit der Uhrzeit und/oder der Fahrzeugumgebung und/oder der Außentemperatur und/oder der Lenksystemtemperatur bestimmt wird.

9. Lenksystem (10) für ein Fahrzeug, mit mindestens einer Zahnstange (12), mit mindestens einem Radaktuator (14), mit mindestens einem Zahnriemen (16) und mit mindestens einem mechanischen Anschlag (18), wobei der Radaktuator (14) parallel zur Zahnstange (12) angeordnet ist, wobei durch den Radaktuator (14) mittels des Zahnriemens (16) eine Zahnstangenverschiebekraft erzeugbar ist und wobei die Zahnstange (12) durch die Zahnstangenverschiebekraft an den mindestens einen mechanischen Anschlag (18) verschiebbar ist, **dadurch gekennzeichnet, dass** das Lenksystem (10) dazu ausgebildet ist, ein Verfahren nach einem der Ansprüche 1 bis 8 durchzuführen.

10. Fahrzeug mit einem Lenksystem (10) nach Anspruch 9.

## Claims

1. Method for determining the wear of a steering system (10) of a vehicle, the steering system (10) having a steering rack (12), the steering system (10) having a wheel actuator (14) in the form of an electric motor, the wheel actuator (14) being arranged in parallel with the steering rack (12), a steering rack displacement force being generated by the wheel actuator (14) by means of a toothed belt (16), and the steering system (10) having at least one mechanical stop (18) for the steering rack (12), **characterized in that** a motor torque is applied by the wheel actuator (14), by means of which motor torque the steering rack (12) is moved to the mechanical stop (18), **in that** a motor angle of the wheel actuator (14) is determined, **in that** after reaching the mechanical stop (18) the motor torque is further increased, **in that** the change in the motor angle of the wheel actuator (14) is determined, and **in that,** depending on the motor angle and the motor torque, a parameter is determined as a measure of the wear of the toothed belt (16).

2. Method according to claim 1, **characterized in that** the parameter is compared with predefined parameters.

3. Method according to either claim 1 or claim 2, **characterized in that** the parameter is compared with parameters from previous test cycles.

4. Method according to any of claims 1 to 3, **characterized in that** a signal is given when the parameter exceeds or falls below a predetermined threshold value.

5. Method according to any of claims 1 to 4, **characterized in that** the parameter is stored in a memory of the vehicle.

6. Method according to any of claims 1 to 5, **characterized in that** the steering system (10) has a second mechanical stop (18) at which the wear is determined.

7. Method according to any of claims 1 to 6, **characterized in that** the wear is determined when the vehicle is stationary.

8. Method according to any of claims 1 to 7, **characterized in that** the wear is determined depending on the time of day and/or the vehicle environment and/or the outside temperature and/or the steering system temperature.

9. Steering system (10) for a vehicle, comprising at least one steering rack (12), comprising at least one wheel actuator (14), comprising at least one toothed belt (16) and comprising at least one mechanical stop (18), the wheel actuator (14) being arranged in parallel with the steering rack (12), a steering rack displacement force being able to be generated by the wheel actuator (14) by means of the toothed belt (16) and the steering rack (12) being able to be displaced to the at least one mechanical stop (18) by the steering rack displacement force, **characterized in that** the steering system (10) is designed to carry out a method according to any of claims 1 to 8.

10. Vehicle having a steering system (10) according to claim 9.

## Revendications

1. Procédé permettant la détermination de l'usure d'un système de direction (10) d'un véhicule, dans lequel le système de direction (10) présente une crémaillère (12), dans lequel le système de direction (10) présente un actionneur de roue (14) sous la forme d'un moteur électrique, dans lequel l'actionneur de roue (14) est disposé parallèlement à la crémaillère (12), dans lequel une force de déplacement de la crémaillère est générée par l'actionneur de roue (14) à l'aide d'une courroie dentée (16) et dans lequel le système de direction (10) présente au moins une butée mécanique (18) pour la crémaillère (12), **caractérisé en ce qu'**un couple moteur est appliqué par l'actionneur de roue (14), par lequel la crémaillère (12) est amenée à la butée mécanique (18), **en ce qu**'un angle moteur de l'actionneur de roue (14) est déterminé, **en ce qu**'après avoir atteint la butée mécanique (18), le couple moteur est encore augmenté, **en ce que** la modification de l'angle moteur de l'actionneur de roue (14) est déterminée, **en ce qu**'en fonction de l'angle moteur et du couple moteur, une valeur caractéristique est déterminée comme mesure de l'usure de la courroie dentée (16).

2. Procédé selon la revendication 1, **caractérisé en ce que** la valeur caractéristique est comparée à des valeurs caractéristiques prédéfinies.

3. Procédé selon la revendication 1 ou 2, **caractérisé en ce que** la valeur caractéristique est comparée à des valeurs caractéristiques de cycles d'essai précédents.

4. Procédé selon l'une des revendications 1 à 3, **caractérisé en ce que** l'on signale lorsque la valeur caractéristique est supérieure ou inférieure à une valeur limite prédéfinie.

5. Procédé selon l'une des revendications 1 à 4, **caractérisé en ce que** la valeur caractéristique est stockée dans une mémoire du véhicule.

6. Procédé selon l'une des revendications 1 à 5, **caractérisé en ce que** le système de direction (10) présente une seconde butée mécanique (18) sur laquelle est effectuée la détermination de l'usure.

7. Procédé selon l'une des revendications 1 à 6, **caractérisé en ce que** la détermination de l'usure est effectuée lorsque le véhicule est à l'arrêt.

8. Procédé selon l'une des revendications 1 à 7, **caractérisé en ce que** l'usure est déterminée en fonction de l'heure et/ou de l'environnement du véhicule et/ou de la température extérieure et/ou de la température du système de direction.

9. Système de direction (10) pour un véhicule, comportant au moins une crémaillère (12), comportant au moins un actionneur de roue (14), comportant au moins une courroie dentée (16) et comportant au moins une butée mécanique (18), dans lequel l'actionneur de roue (14) est disposé parallèlement à la crémaillère (12), dans lequel une force de déplacement de la crémaillère peut être générée par l'actionneur de roue (14) à l'aide de la courroie dentée (16) et dans lequel la crémaillère (12) peut être déplacée par la force de déplacement de crémaillère contre l'au moins une butée mécanique (18), **caractérisé en ce que** le système de direction (10) est conçu pour mettre en oeuvre un procédé selon l'une des revendications 1 à 8.

10. Véhicule comportant un système de direction (10) selon la revendication 9.
